# EUROPÄISCHE PATENTSCHRIFT

(11) **EP 1 960 459 B1**
(45) Veröffentlichungstag und Bekanntmachung des Hinweises auf die Patenterteilung: **02.02.2011**
(21) Anmeldenummer: 06830236.3
(22) Anmeldetag: 30.11.2006
(51) Int. Cl.: C08J 9/28

(54) **NANOPORÖSE POLYMERSCHAUMSTOFFE AUS POLYKONDENSATIONS-REAKTIVHARZEN**
NANOPOROUS POLYMER FOAMS CONSISTING OF REACTIVE POLYCONDENSATION RESINS
MOUSSES POLYMÈRES NANOPOREUSES CONSTITUÉES DE RÉSINES RÉACTIVES PRODUITES PAR POLYCONDENSATION

(30) Priorität: 09.12.2005 DE 102005059303
(43) Veröffentlichungstag der Anmeldung: 27.08.2008
(73) Patentinhaber: BASF SE, 67056 Ludwigshafen (DE)
(72) Erfinder: SCHÄDLER, Volker, 67487 Maikammer (DE); RAMAN, Vijay Immanuel, B.V. Nagar, Meenambakkam, Chennai-600 114 (IN); DU FRESNE VON HOHENESCHE, Cedric, 68167 Mannheim (DE)
(86) Internationale Anmeldenummer: PCT/EP2006/069132
(87) Internationale Veröffentlichungsnummer: WO 2007/065847

(56) Entgegenhaltungen:
- EP-A2- 0 220 506
- WO-A-99/01502
- WO-A-2005/049708
- US-A- 5 086 085
- US-A- 5 128 382

## Beschreibung

Die Erfindung betrifft ein Verfahren zur Herstellung eines nanoporösen Polymerschaumstoffes aus einem Polykondensations-Reaktivharz.

Nanoporöse Polymerschaumstoffe mit einer Porengröße von deutlich unter 1 µm und einer Gesamt-Porosität von über 90 % sind auf Grund theoretischer Überlegungen besonders hervorragende Wärmeisolatoren.

Zur Herstellung solcher nanoporöser Polymerschaumstoffe sind Sol-Gel-Techniken weit verbreitet. So beschreibt die WO 00/24799 Isolationskörper, die durch Mischen von organischen Polyisocyanaten mit Isocyanattrimerisierungskatalysatoren über eine Polymergelstufe und deren Trocknung erhalten werden können. A. Rigacci et al. beschreiben in Journal of Non-Crystalline Solids 350 (2004), Seiten 372 bis 378, ein Verfahren zur Herstellung von Aerogelen und Xerogelen auf Basis von Polyurethanen. Diese zeigen signifikant niedrigere thermische Leitfähigkeit als Standard-Polyurethan-Schaumstoffe.

Aus US 5,128,382 sind mikrocelluläre Schaumstoffe auf Basis von Epoxidharz bzw. Methacrylaten bekannt. Sie können durch Polymerisation in einem Lösungsmittel/ Nichtlösungsmittel und anschließender Trocknung unter subkritischen Bedingungen erhalten werden.

Zur Herstellung von Hydrogelen auf Melaminharzbasis werden gewöhnlich hydrophile Melamine in wässrigem Medium durch Vernetzungsreaktionen hergestellt. Diese Hydrogele werden anschließend unter Sub- oder Superkritischen Bedingungen zu Aerogelen oder Xerogelen getrocknet. Der Trocknungsschritt erfolgt in der Regel nach einem ein- oder mehrfachen Austausch des Wassers mit einem organischen Lösungsmittel. Im Falle der Extraktion mit Kohlendioxid dient das organische Lösungsmittel dazu, die richtige Polarität einzustellen. Im Falle der subkritischen Trocknung dient der Lösungsmittelaustausch dazu, die richtige Oberflächenspannung und Benetzungseigenschaften herzustellen. Üblicherweise sind hierfür mehr als ein Lösungsmittelaustausch notwendig.

Die WO 05/049708 betrifft nanoporöse Polymerschaumstoffe, welche durch Härten von Mikroemulsionen erhältlich sind. Die Mikroemulsion enthält eine wässrige Reaktivharz-Phase, ein geeignetes Amphiphil und eine Ölphase, wobei die reaktiven Komponenten einer Polykondensation unterworfen werden. Im anschließenden Trockenvorgang wird der so erhaltene Gelkörper von den fluiden Komponenten, beispielsweise durch Gefriertrocknung befreit.

Bei den genannten Verfahren zur Herstellung von nanoporösen Polymerschaumstoffen erfolgt der Trockenschritt entweder unter aufwändigen überkritischen Bedingungen oder auf Grund der auftretenden hohen Kapillarkräfte unter Schrumpfung des Polymerschaumstoffes.

Aufgabe der vorliegenden Erfindung war es, den genannten Nachteilen abzuhelfen und ein Verfahren zur Herstellung von nanoporösen Polymerschaumstoffen bereitzustellen, bei dem das Trocknen der Gelkörper unter subkritischen Bedingungen möglich ist und ein geringes Schrumpfen des Gelkörpers erfolgt.

Demgemäß wurde ein Verfahren zur Herstellung eines nanoporösen Polymerschaumstoffes mit einem mittleren Porendurchmesser im Bereich von 10 bis 1000 nm, gefunden, welches die folgenden Stufen a) bis c) umfasst:
a) Bereitstellen einer Lösung eines Polykondensations-Reaktivharzes in einem organischen Lösungsmittel,
b) Vermischen der Lösung mit einem Härtungskatalysator für das Polykondensations-Reaktivharz und härten der Reaktivkomponenten unter Bildung eines Gels und
c) Entfernen des organischen Lösungsmittels.

Als Polykondensations-Reaktivharze werden solche Harze verstanden, die durch eine Polykondensationsreaktion erhältlich sind und durch Zugabe von Härtern bei Raumtemperatur oder ohne Härter bei höheren Temperaturen reagieren können. Beispiele hierfür sind Aminoplastharze, beispielsweise Hamstoff-, Benzoguanamin- oder Melamin-Formaldehydharze oder Mischungen davon. Erfindungsgemäß werden solche Polykondensations-Reaktivharze eingesetzt, die in einem organischen Lösungsmittel löslich sind. Vorzugsweise setzt man hydrophobe Harze ein, welche mit weniger als 10 Gew.-%, bevorzugt mit weniger als 5 Gew.-%, insbesondere weniger als 0,01 Gew.-% Wasser mischbar sind.

Besonders bevorzugt werden veretherte Polykondensations-Reaktivharze, welche in Stufe b) unter Abspaltung eines Alkohols härten. Auf Grund der Alkohol-Abspaltung wird das Lösungsverhalten während der Gelbildung beeinflusst. Besonders bevorzugt wird ein mit Butanol verethertes, hochalkyliertes Melamin-Formaldehyd-Harz, welches mit Wasser und Methanol unverdünnbar ist.

Bei den bevorzugten Melamin-Formaldehyd-Harzen liegt das Melamin/Formaldehyd-Verhältnis im Bereich von 1:1 bis 1:10, bevorzugt im Bereich von 1:2 bis 1:6.

Als organische Lösungsmittel für das Polykondensations-Reäktivharz kommen unpolare Verbindungen, wie Kohlenwasserstoffe, Alkohole, Ketone, Ether oder Alkylester in Betracht. Um beim Verdampfen leicht aus dem Polymergel entfernt werden zu können, weisen die Lösungsmittel bevorzugt einen Siedepunkt bei Normaldruck unter 120°C auf. Beispiele für geeignet organische Lösungsmittel sind lineare oder verzweigte Kohlenwasserstoffe mit 1 bis 6 Kohlenstoffatomen, insbesondere Pentan, Hexan oder Heptan. Besonders bevorzugte Lösungsmittel sind Tetrahydrofuran, Aceton, Methylethylketon, Ethylacetat oder Chloroform.

Die Konzentration des Polykondensations-Reaktivharzes in der Lösung in Stufe a) beträgt in der Regel 5 bis 25, bevorzugt 8 bis 15 Gew.-%.

Art und Menge des Härtungskatalysators richten sich nach dem eingesetzten Polykondensationsharz. Für Aminoplaste können beispielsweise organische oder anorganische Säuren, z.B. Phosphorsäure, Salzsäure, para-Toluolsulfonsäure oder Carbonsäuren wie Essig- oder Ameisensäure, eingesetzt werden.

In der Regel erfolgt die Härtung in Stufe b) bei einem Verhältnis Polykondensations-Reaktivharz:Härtungskatalysator im Bereich von 1 bis 20, vorzugsweise 4 bis 10 Gew.-Anteilen, bezogen auf Feststoff. Auch Kombinationen mit Salzen sind hilfreich bei der Kontrolle der Reaktionskinetik. Der Wassergehalt sollte unter 10 Gew.-%, bevorzugt unter 5 Gew-%, insbesondere unter 0,01 Gew.-% liegen.

Zusätzlich können Vernetzungskomponenten (Härter) verwendet werden, z.B. Harnstoff oder 2,4-Diamino-6-nonyl-1,3,5-triazine bei Melamin-Formaldehyd-Harzen.

Die Härtung erfolgt in der Regel bei Temperaturen im Bereich von 30 bis 100°C, bevorzugt im Bereich von 50 bis 70°C. Die Gelierung erfolgt hierbei in einem Zeitraum von etwa 0,5 bis 10, vorzugsweise 1 bis 4 Stunden. Dabei bildet sich eine Mikrostruktur durch Phasenseparation des Polymernetzwerkes aus.

Anschließend wird in Stufe c) das organische Lösungsmittel entfernt. Dies geschieht bevorzugt unter subkritischen Bedingungen, besonders bevorzugt bei Normaldruck und Raumtemperatur.

Die nach der Trocknung erhältlichen nanoporösen Polymerschaumstoffe zeichnen sich durch eine hohe Gesamtporosität und damit verbundene niedere Dichte und geringe Porengröße aus. Der mittleren Porendurchmesser liegt im Bereich von 10 bis 1000 nm, bevorzugt im Bereich von 30 bis 300 nm.

Die erfindungsgemäßen nanoporösen Polymerschaumstoffe weisen eine geringe Wärmeleitfähigkeit, in der Regel unter 33 mW/mK auf und eignen sich daher besonders für Wärmeisolationsanwendungen, wie Dämmplatten im Baugewerbe, Kühlaggregaten, Fahrzeugen oder Industrieanlagen.

### Beispiele

Als Polykondensations-Reaktivharz wurde in den Beispielen ein mit Butanol verethertes, hochalkyliertes Melamin-Formaldehyd-Harz eingesetzt (Luwipal 44 der BASF AG).

Die Porosität wurde durch Quecksilberintrusion nach DIN 66133 bestimmt.
Die spezifische Oberfläche wurde nach BET (DIN 66131) ermittelt.

### Beispiel 1

Eine 10 gew.-%ige Luwipal 44-Lösung in Tetrahydrofuran wurde mit einer 37 gew.-%igen Salzsäure im Gewichtsverhältnis 5:1, bezogen auf Feststoff, gemischt und bei 60°C für 3 Stunden im Ofen zur Gelierung gebracht. Das erhaltene Organogel wurde bei Raumtemperatur an Luft getrocknet. Die Quecksilberporositätsmessung an dem erhaltenen Xerogel ergab eine Gesamtporosität von 80 % mit einem überwiegenden Porenvolumenanteil mit einer Porengröße unter 1000 nm. Die spezifische Oberfläche betrug 170 m²/g.

### Beispiel 2

Eine 10 gew.-%ige Luvipal 44-Lösung in Aceton wurde mit einer 37 gew.-%igen Salzsäure im Gewichtsverhältnis 5:1, bezogen auf Feststoff, vermischt. Die Gelierung erfolgte im Ofen bei 60°C und 3 Stunden. Das erhaltene Organogel wurde an der Luft getrocknet. Die Quecksilberporositätsmessung ergab eine Gesamtporosität von 86 % mit einem überwiegenden Porenvolumenanteil mit einer Porengröße unter 1000 nm. Die spezifische Oberfläche betrug 25 m²/g.

### Beispiel 3

Eine 10 gew.-%ige Luvipal 44-Lösung in Tetrahydrofuran wurde mit para-Toluolsulfonsäure im Gewichtsverhältnis 5:1, bezogen auf Feststoff, gemischt und mit 1 g vollentsalztes Wasser auf 30 ml der Mischung versetzt. Die Gelierung erfolgte im Ofen bei 60°C für 3 Stunden. Das erhaltene Organogel wurde an Luft getrocknet. Die Quecksilberporositätsmessung an dem nanoporösen Polymerschaumstoff ergab eine Gesamtporosität von 75 % mit einem überwiegenden Porenvolumenanteil mit einer Porengröße unter 1000 nm. Die spezifische Oberfläche von 82 m²/g.

## Patentansprüche

1. Verfahren zur Herstellung eines nanoporösen Polymorschaumstoffes mit einem mittleren Porendurchmesser im Bereich von 10 bis 1000 nm, umfassend die Stufen:
a) Bereitstellen einer Lösung eines Polykondensations-Reaktivharzes in einem organischen Lösungsmittel,
b) Vermischen der Lösung mit einem Härtungskatalysator für das Polykondensations-Reaktivharz und härten der Reaktivkomponenten unter Bildung eines Gels und
c) Entfernen des organischen Lösungsmittels.

2. Verfahren nach Anspruch 1, **dadurch gekennzeichnet, dass** als Polykondensation Reaktivharz ein Harnstoff- oder Melamin-Formaldehyd-Harz eingesetzt wird.

3. Verfahren nach Anspruch 1 oder 2, **dadurch gekennzeichnet, dass** die Härtung des Polykondensations-Reaktivharzes in Stufe b) unter Abspaltung eines Alkohols erfolgt.

4. Verfahren nach einem der Ansprüche 1 bis 3, **dadurch gekennzeichnet, dass** als Polykondensations-Reaktivharz ein hydrophobes Harz, welches mit weniger als 10 Gew.-% Wasser mischbar ist, eingesetzt wird.

5. Verfahren nach einem der Ansprüche 1 bis 4, **dadurch gekennzeichnet, dass** als Lösungsmittel ein Kohlenwasserstoff, Alkohol, Keton, Ether, Alkylester oder Mischungen davon mit einem Siedepunkt bei Normaldruck unter 120°C eingesetzt wird.

6. Verfahren nach einem der Ansprüche 1 bis 5, **dadurch gekennzeichnet, dass** die Lösung in Stufe b) einen Wassergehalt von weniger als 10 Gew.-% aufweist.

7. Verfahren nach einem der Ansprüche 1-6, **dadurch gekennzeichnet, dass** als Härtungskatalysator eine organische oder anorganische Säure eingesetzt wird.

## Claims

1. A process for the production of a nanoporous polymer foam having an average pore diameter in the range from 10 nm to 1000 nm, comprising the following stages:
a) providing a solution of a polycondensation reactive resin in an organic solvent,
b) mixing the solution with a curing catalyst for the polycondensation reactive resin and curing the reactive components to form a gel, and
c) removing the organic solvent.

2. The process according to claim 1, wherein the reactive polycondensation resin used is a urea formaldehyde resin or a melamine formaldehyde resin.

3. The process according to claim 1 or claim 2, wherein curing of the reactive polycondensation resin in stage b) is carried out with elimination of an alcohol.

4. The process according to any one of claims 1 to 3, wherein the reactive polycondensation resin used is a hydrophobic resin which is miscible with less than 10 % by weight of water.

5. The process according to any one of claims 1 to 4, wherein the solvent used is a hydrocarbon, an alcohol, a ketone, an ether, an alkyl ester, or a mixture thereof having a boiling point under standard pressure of less than 120°C.

6. The process according to any one of claims 1 to 5, wherein the solution in stage b) has a water content of less than 10% by weight.

7. The process according to any one of claims 1 to 6, wherein the curing catalyst used is an organic or inorganic acid.

## Revendications

1. Procédé pour la préparation d'une mousse de polymère nanoporeuse présentant un diamètre moyen de pores dans la plage de 10 à 1000 nm, comprenant les étapes :
a) préparation d'une solution d'une résine réactive de polycondensation dans un solvant organique,
b) mélange de la solution avec un catalyseur de durcissement pour la résine réactive de polycondensation et durcissement des composants réactifs avec formation d'un gel et
c) élimination du solvant organique.

2. Procédé selon la revendication 1, **caractérisé en ce qu'**on utilise comme résine réactive de polycondensation une résine d'urée-formaldéhyde ou de mélamine-formaldéhyde.

3. Procédé selon la revendication 1 ou 2, **caractérisé en ce que** le durcissement de la résine réactive de polycondensation dans l'étape b) est réalisé avec dissociation d'un alcool.

4. Procédé selon l'une quelconque des revendications 1 à 3, **caractérisé en ce qu'**on utilise comme résine réactive de polycondensation une résine hydrophobe, qui est miscible à moins de 10% en poids avec l'eau.

5. Procédé selon l'une quelconque des revendications 1 à 4, **caractérisé en ce qu'**on utilise comme solvant un hydrocarbure, un alcool, une cétone, un éther, un ester d'alkyle ou des mélanges de ceux-ci avec un point d'ébullition à pression normale inférieur à 120°C.

6. Procédé selon l'une quelconque des revendications 1 à 5, **caractérisé en ce que** la solution dans l'étape b) présente une teneur en eau inférieure à 10% en poids.

7. Procédé selon l'une quelconque des revendications 1-6, **caractérisé en ce qu'**on utilise comme catalyseur de durcissement un acide organique ou inorganique.
